# EUROPÄISCHE PATENTANMELDUNG

(11) **EP 0 743 544 A2**
(43) Veröffentlichungstag der Anmeldung: **20.11.1996**
(21) Anmeldenummer: 96106594.3
(22) Anmeldetag: 26.04.1996
(51) Int. Cl.: G02B 6/44

(54) **Gestelleinsatz mit Schublade für Lichtwellenleiter**

(30) Priorität: 17.05.1995 DE 19518022
(71) Anmelder: Alcatel SEL Aktiengesellschaft, D-70435 Stuttgart (DE)
(72) Erfinder: Amberger, Reinhard, 70449 Stuttgart (DE)
(74) Vertreter: Schätzle, Albin, Dipl.-Phys.

(57) **Zusammenfassung**

Ein Gestelleinsatz (1) mit Schublade (5) zur Unterbringung von optischen Spleiß- und/oder Kabelkassetten hat eine Bauhöhe von ≦ 25 mm. Damit die für Glasfaserkabel (7) vorgegebenen Mindestbiegeradien eingehalten werden, sind zu beiden Seiten der Schublade (5) schwenkbar gelagerte Kabelleitbleche (6) angeordnet, die einen Radius von mindestens 30 mm haben und in Einbaulage des Gestelleinsatzes (1) in die seitlichen Verkabelungsräume des Gestells eintauchen. An den Kabelleitblechen (6) vorn und hinten vorgesehene Auflaufschrägen (14) sorgen dafür, daß sie bei der Montage und Demontage des Gestelleinsatzes (1) selbsttätig nach oben ausgelenkt werden.

## Beschreibung

Die Erfindung betrifft einnen Gestelleinsatz mit Schublade zur Unterbringung von Spleiß- und/oder Kabelkassetten, der mit seitlichen, der Befestigung in einem Gestell dienenden Haltelaschen versehen ist. Solche Gestelleinsätze werden insbesondere in Systemen der optischen Nachrichtentechnik verwendet.

Ein Gestelleinsatz der im Oberbegriff des Anspruchs 1 bezeichneten Ausführung ist aus dem Dokument DE 94 07 851.3 U1 bekannt. Der Gestelleinsatz ist als geschlossenes Gehäuse ausgebildet, das seitliche Führungsschienen hat. In der aus dem Gestell herausgezogenen Stellung läßt sich ein Deckel abschrauben, wodurch die im Gehäuse auf einem Dorn gestapelten Kassetten zugänglich sind. Die Glasfaserkabel werden dem Gehäuse von der Rückseite zugeführt, die hierfür Ausschnitte mit darin befestigten Kabelhaltern hat. Zwei in den seitlichen Haltelaschen jeweils übereinander angeordnete Bohrungen dienen der Befestigung des Gestelleinsatzes an Gestellholmen.

Gestelleinsätze für Spleißkassetten, die zur Führung von Glasfaserkabeln Kabelleitbleche haben, sind an sich bekannt. Eine in der DE 93 18 384.4 U1 beschriebene Ausführung hat hochkant stehende Kassetten, unter denen trompetenartig angeordnete Kabelleitbleche mechanisch fester Bestandteil des Gestelleinsatzes sind. Wegen der beträchtlichen Bauhöhe beansprucht der Gestelleinsatz jedoch relativ viel Einbauvolumen. Selbst bei einem Gestelleinsatz mit Kabelleitblechen, der ausschließlich der Führung von Glasfaserkabeln dient, erstreckt sich der Platzbedarf noch über mehrere Gestellhöhen-Teilungsabstände (EP-A-0 593 927).

Der Erfindung liegt die Aufgabe zugrunde, einen Gestelleinsatz für die Unterbringung von wenigstens zwei optischen Spleißkassetten zu schaffen, der einerseits eine möglichst niedrige Bauhöhe hat und bei dem andererseits gewährleistet sein soll, daß in den Gestelleinsatz einlaufende und abgehende Glasfaserkabel einen noch zulässigen Mindestbiegeradius von 30 mm nicht unterschreiten. Diese Aufgabe wird erfindungsgemäß von einem Gestelleinsatz mit den Merkmalen des Anspruchs 1 gelöst. Vorteilhafte Ausgestaltungen sind den Unteransprüchen zu entnehmen.

Die Erfindung wird anhand einer Zeichnung, in der ein Ausführungsbeispiel eines Gestelleinsatzes und ein darunter angeordneter Baugruppenträger als Ausschnitt dargestellt ist, wie folgt näher beschrieben:

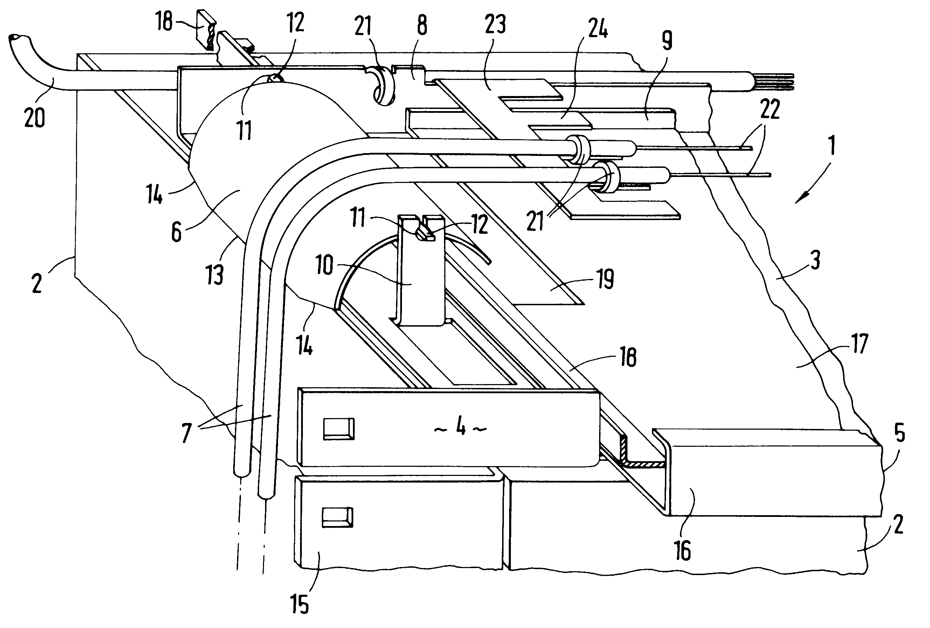

In der Zeichnung ist der Gestelleinsatz mit 1 und der unter diesem angedeutete Baugruppenträger mit 2 bezeichnet. Der Gestelleinsatz 1 besteht im wesentlichen aus einem Bodenblech 3 mit je einer an der Vorderseite hochgebogenen, seitlich überstehenden Haltelasche 4 mit Bohrung zur Befestigung in einem Gestell. Zwischen den Haltelaschen 4 befindet sich eine Schublade 5, neben der zumindest an einer Seite des Gestelleinsatzes 1, vorzugsweise jedoch an beiden Seiten ein Kabelleitblech 6 schwenkbar gelagert ist.

Hinter den Haltelaschen 4 zwischen Bodenblech 3 und den gelochten Befestigungsenden der Haltelaschen befinden sich auf beiden Gestellseiten Verkabelungsräume für in den Gestelleinsatz 1 einlaufende und abgehende Glasfaserkabel 7. Die im Gestell in Schlaufen durchhängenden Glasfaserkabel 7 sind von unten ankommend über das Kabelleitblech 6 in den Gestelleinsatz 1 geführt. Das Kabelleitblech 6 hat einen Biegeradius von mindestens 30 mm und eine Schwenkachse, die parallel zur Bewegungsrichtung der Schublade verläuft.

Das Ende des Bodenbleches 3 ist rechtwinklig hochgebogen und bildet eine Rückwand 8, an der die nicht ganz so hohe Rückwand 9 der Schublade 5 im eingeschobenen Zustand zur Anlage kommt. Neben der Schublade 5 steht ein hinter der Haltelasche 4 aus dem Bodenblech 3 freigeschnittener Stützlappen 10 hoch, der am oberen Ende eine Bohrung 11 enthält, die einem an der Stirnseite des Kabelleitbleches 6 vorstehenden Zapfen 12 als Lager dient. Die Bohrung 11 kann zur leichteren Montage des Kabelleitbleches 6 geschlitzt sein, muß es jedoch nicht unbedingt, da der Blechlappen 10 sich ausreichend weit wegdrücken läßt und dann zurückfedert. Ein an der anderen Stirnseite des Kabelleitbleches 6 vorstehender Zapfen 12 steckt in einer entsprechenden Bohrung 11 der Rückwand 8 des Gestelleinsatzes 1.

Die Zapfen 12 sind zwischen den Längsseiten des Kabelleitbleches 6 exzentrisch angeordnet und zwar so, daß in Einbaulage des Gestelleinsatzes 1, von der Haltelasche 4 ausgesehen, die linke Längsseite 13 in den Verkabelungsraum des Gestells eintaucht und dabei den unter dem Gestelleinsatz 1 befestigten Baugruppenträger 2 seitlich überlappt. Damit das Kabelleitblech 6 bei der Montage und Demontage des Gestelleinsatzes 1 selbsttätig hochschwenken kann, ist an der Längsseite 13 vorn und hinten je eine Auflaufschräge 14 vorgesehen, die das Kabelleitblech 6 nach oben auslenken, sobald sie gegen die Haltelasche 15 des unter dem Gestelleinsatz 1 befestigten Baugruppenträgers 2 stoßen. Durch die exzentrische Lagerung des Kabelleitbleches 6 wird erreicht, daß es stets eine ausreichend stabile Funktionslage einnimmt.

Die Schublade 5 besteht aus relativ dünnem Blech, das an der Vorderseite zu einer Griffleiste 16 gebogen ist. Die Seitenwände werden von je einer mit dem Bodenblech 17 der Schublade 5 durch Nieten oder Punktschweißen verbundenen Winkelschiene 18 gebildet. Wie die Zeichnung erkennen läßt, hat der Gestelleinsatz 1 eine kürzere Einbautiefe als der Baugruppenträger 2. Die Winkelschiene 18 durchsetzt daher die Rückwand 8 des Gestelleinsatzes 1 und erstreckt sich bei eingeschobener Schublade 5 bis an das Ende des Baugruppenträgers 2. Die Winkelschiene 18 ist somit in der Rückwand 8 und außerdem noch mittels einer im Bereich des Kabelleitblech-Vorderendes aus dem Bodenblech 3 des Gestelleinsatzes 1 freigeschnittenen und über den unteren Schenkel der Winkelschiene 18 gebogenen Lasche (nicht dargestellt) geführt. Wegen der als Niederhalter dienenden Lasche ist im Bodenblech 17 der Schublade 5 ein Schlitz 19 vorgesehen.

Der Gestelleinsatz 1 mit der Schublade 5 ist symmetrisch aufgebaut und hat die beschriebenen konstruktiven Ausbildungen in spiegelbildlicher Anordnung auch auf der in der Zeichnung nicht dargestellten, anderen Seite. Die Bauhöhe des Gestelleinsatzes 1 beträgt ≦ 25 mm, das heißt, daß dieses Maß an keiner Stelle überschritten ist und von Haltelaschen 4, Rückwand 8, Griffleiste 16 und den Stützlappen 10 mit angehobenen Kabelleitblechen 6 eingehalten wird. Da die handelsüblichen Spleißkassetten etwa 8 mm bis 10 mm dick sind, finden in der Schublade 5 zwei übereinander liegende Kassetten ausreichend Platz. Wegen der ungewöhnlich flachen Bauweise kann der Gestelleinsatz 1 in vorteilhafter Weise sowohl für Gestelle mit einer üblichen Höheneinteilung (Rastermaß für Befestigungsbohrungen in den Gestellholmen) von 2,54 cm als auch für Gestelle mit einer genormten Höheneinteilung von 25 mm verwendet werden. An den Enden der Winkelschienen 18 ist zweckmäßigerweise eine Sicherung vorgesehen, die ein versehentliches Herausfallen der Schublade 6 verhindert. Sie kann jedoch soweit ausgezogen werden, daß darin untergebrachte Kassetten, die Spleiße, optische Koppler und Kabelüberlängen enthalten, bequem entnommen werden können.

Ein in das Gestell einlaufendes Amtskabel 20, das z.B. 16 Einzeladern hat und ausreichend biegesteif ist, kann ohne Führung hinter dem Gestelleinsatz 1 an dessen Rückwand 8 mittels Kabelbinder 21 befestigt werden. Die aus Einzeladern 22 bestehenden und über die Kabelleitbleche 6 geführten Glasfaserkabel 7 sind ebenfalls mit Kabelbindern 21 an Zinken 24 eines Haltekammes 23 befestigt, der von der Rückwand des Gestelleinsatzes 1 mit parallelem Abstand zum Bodenblech 17 in die Schublade 5 ragt.

Der Gestelleinsatz 1 mit Schublade 5 beansprucht nur eine einzige Gestell-Höhenteilung und gestattet eine bessere Ausnutzung des Gestellvolumens durch die Möglichkeit seiner variablen Positionierung. Bedarfsweise kann der Gestelleinsatz 1 im Gestell einem jeden Baugruppenträger 2 zugeordnet werden. Der Gestelleinsatz 1 ist außerdem besonders preiswert herstellbar, da er aus nur wenigen Blechstanzteilen gefertigt werden kann.

## Patentansprüche

1. Gestelleinsatz mit Schublade zur liegenden Unterbringung von Spleiß- und/oder Kabelkassetten, der mit seitlichen, der Befestigung in einem Gestell dienenden Haltelaschen versehen ist,
**dadurch gekennzeichnet,** daß der Gestelleinsatz (1) eine Bauhöhe von ≦ 25 mm hat und zumindest an einer Seite neben der Schublade (5) für ein- und auslaufende Glasfaserkabel (7) mit einem schwenkbar gelagerten Kabelleitblech (6) versehen ist, das einen Biegeradius von mindestens 30 mm hat und in der Einbaulage des Gestelleinsatzes (1) in den Verkabelungsraum des Gestells eintaucht und das bei Montage und Demontage des Gestelleinsatzes (1) nach oben auslenkbar ist.

2. Gestelleinsatz mit Schublade nach Anspruch 1, dadurch gekennzeichnet, daß das Kabelleitblech (6) an den Stirnseiten exzentrisch angeordnete Zapfen (12) hat, mit denen es so in Bohrungen (11) der Rückwand (8) und eines Stützlappens (10) gelagert ist, daß dessen Schwenkachse parallel zur Bewegungsrichtung der Schublade (5) verläuft.

3. Gestelleinsatz mit Schublade nach Anspruch 2, dadurch gekennzeichnet, daß das Kabelleitblech (6) an der in den Verkabelungsraum eintauchenden Längsseite (13) vorn und hinten mit je einer Auflaufschräge (14) versehen ist.

4. Gestelleinsatz mit Schublade nach Anspruch 1, dadurch gekennzeichnet, daß die Schublade (5) an den Seiten je eine mit einem Bodenblech (17) verbundene Winkelschiene (18) hat, welche die Rückwand (8) des Gestelleinsatzes (1) durchsetzt.

5. Gestelleinsatz mit Schublade nach Anspruch 4, dadurch gekennzeichnet, daß die Winkelschiene (18) im Bereich der vorderen Stirnseite des Kabelleitbleches (6) von einer den unteren Schenkel übergreifenden Lasche geführt ist.

6. Gestelleinsatz mit Schublade nach Anspruch 1, dadurch gekennzeichnet, daß der Gestelleinsatz (1), die Kabelleitbleche (6) und die Schublade (5) aus Blechstanzteilen hergestellt sind.
